# FASCICULE DE BREVET EUROPEEN

(11) **EP 2 590 269 B1**
(45) Date de publication et mention de la délivrance du brevet: **10.05.2017**
(21) Numéro de dépôt: 12190430.4
(22) Date de dépôt: 29.10.2012
(51) Int. Cl.: H01R 13/44, H01R 13/60, H02G 3/00

(54) **Cache pour conducteur électrique et conducteur électrique équipé d'un tel cache**
Abdeckung für elektrischen Leiter und mit einer solchen Abdeckung ausgerüsteter elektrischer Leiter
Cover for electric conductor and electric conductor equipped with such a cover

(30) Priorité: 04.11.2011 FR 1159975
(43) Date de publication de la demande: 08.05.2013
(73) Titulaire: Integration Technique et Cablage (ITEC), 49480 Saint Sylvain d'Anjou (FR)
(72) Inventeur: Bachelot, Jacques, 49480 Saint Sylvain d'Anjou (FR)
(74) Mandataire: Le Guen-Maillet

(56) Documents cités:
- CN-Y- 201 117 906
- US-A- 3 629 790
- US-A- 3 926 494

## Description

La présente invention concerne un cache pour un conducteur électrique, ainsi qu'un conducteur électrique équipé d'un tel cache.

Un connecteur électrique comporte généralement une cage électriquement conductrice présentant un passage en travers duquel se visse une vis. La connexion d'un conducteur électrique avec le connecteur électrique consiste alors à dénuder une extrémité du conducteur électrique, à insérer l'extrémité ainsi dénudée dans le passage puis à visser la vis afin de fixer l'extrémité dénudée dans le passage.

Il peut arriver que l'extrémité dénudée soit sous tension et le technicien en charge de la connexion peut alors subir un choc électrique s'il entre en contact avec ladite extrémité dénudée.

Les documents US-A-3,926,494, US-A-3,629,790 et CN-Y-201 117 906 divulguent des conducteurs électriques équipés de cache.

Un objet de la présente invention est de proposer un cache pour un conducteur électrique qui ne présente pas les inconvénients de l'art intérieur et qui en particulier évite la mise en contact entre un technicien et l'extrémité dénudée du conducteur électrique.

A cet effet, est proposé un cache pour un conducteur électrique présentant une gaine électriquement isolante et une extrémité dénudée, ledit cache étant réalisé dans un matériau électriquement isolant et comportant :
- un sabot destiné à être fixé sur la gaine,
- un capot présentant une première extrémité emmanchée sur le sabot et une deuxième extrémité destiné à être emmanchée sur l'extrémité dénudée et présentant un orifice, ledit capot étant monté coulissant par rapport au sabot entre une position de sécurité dans laquelle l'extrémité dénudée ne sort pas par ledit orifice et une position de connexion dans laquelle l'extrémité dénudée sort par ledit orifice, et
- un moyen de rappel prévu pour contraindre le capot en position de sécurité,
le cache étant caractérisé en ce que le capot présente un épaulement prévu pour etre perpendiculaire à l'axe de l'extrémité dénudée, en ce que le capot est constitué d'un premier cylindre entre la première extrémité et l'épaulement et un deuxième cylindre coaxial au premier cylindre entre l'épaulement et la deuxième extrémité, en ce que le premier cylindre a un premier rayon et en ce que le deuxième cylindre a un deuxième rayon inférieur audit premier rayon.

Avantageusement, le moyen de rappel est un ressort de compression disposé à l'intérieur du capot dont l'une des extrémités s'appuie sur le sabot et dont l'autre extrémité s'appuie sur une paroi de rappel du capot.

Avantageusement, le capot comporte, pour chaque position, des moyens formant butée prévus pour stopper ledit capot dans ladite position et l'empêcher d'aller au-delà de ladite position.

L'invention propose également un conducteur électrique équipé comportant :
- un conducteur électrique présentant une gaine électriquement isolante et une extrémité dénudée, et
- un cache selon l'une des variantes précédentes.

Avantageusement, le moyen de rappel est un ressort de compression disposé à l'intérieur du capot dont l'une des extrémités s'appuie sur le sabot et dont l'autre extrémité s'appuie sur une paroi de rappel du capot.

Avantageusement, le capot comporte, pour chaque position, des moyens formant butée prévus pour stopper ledit capot dans ladite position et l'empêcher d'aller au-delà de ladite position.

Les caractéristiques de l'invention, mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. la montre un conducteur électrique équipé de l'état de la technique en position de sécurité,
la Fig. 1b montre le conducteur électrique équipé de la Fig. 1a en position de connexion,
la Fig. 2a montre un conducteur électrique équipé selon un mode de réalisation de l'invention en position de sécurité, et
la Fig. 2b montre le conducteur électrique équipé de la Fig. 2a en position de connexion.

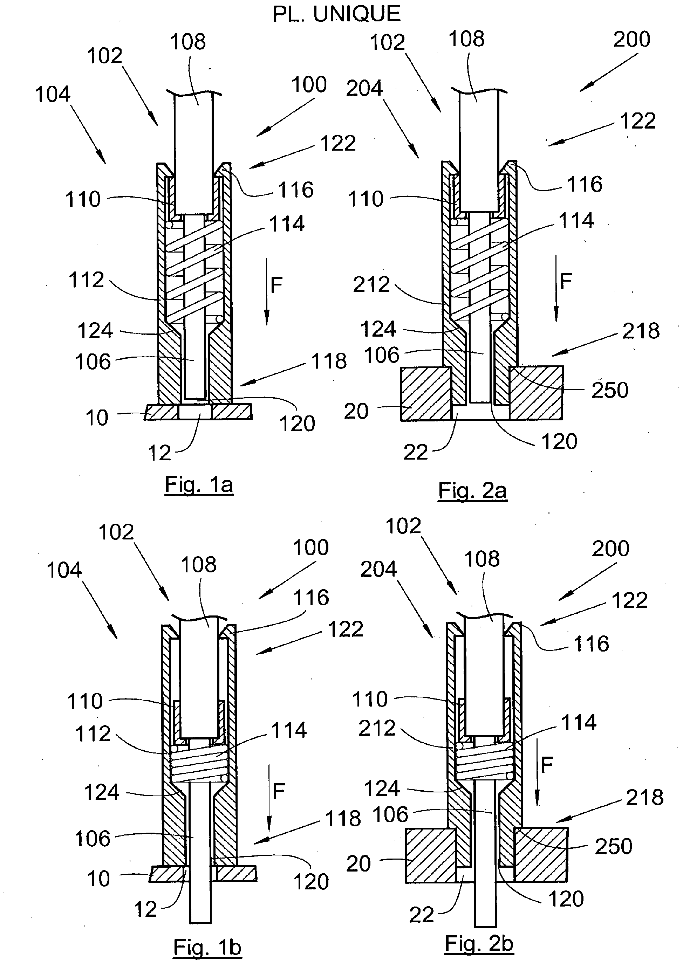

Les Figs. 1a et 1b montrent un conducteur électrique équipé 100 de l'état de la technique.

Le conducteur électrique équipé 100 comporte un conducteur électrique 102 et un cache 104 réalisé dans un matériau électriquement isolant.

Le conducteur électrique 102 présente une âme électriquement conductrice entourée d'une gaine électriquement isolante 108. Le conducteur électrique 102 présente une extrémité dénudée 106 qui est constituée par l'âme qui sort de la gaine 108.

La Fig. la montre le conducteur électrique équipé 100 dans une position de sécurité dans laquelle l'extrémité dénudée 106 est logée dans le cache 104, et la Fig. 1b montre le conducteur électrique équipé 100 dans une position de connexion dans laquelle l'extrémité dénudée 106 sort du cache 104.

Le cache 104 comporte un sabot 110, un capot 112 et un moyen de rappel 114.

Le sabot 110 est fixé sur le conducteur électrique 102 et plus particulièrement à l'extrémité de la gaine 108. Le sabot 110 prend ici la forme d'une couronne fixée sur la gaine 108. La fixation du sabot 110 peut être réalisée par différentes solutions, comme le sertissage, le collage, ...

Le capot 112 prend la forme d'un cylindre creux coaxial avec l'extrémité dénudée 106 et présentant une première extrémité 122 qui est emmanchée sur le sabot 110 et une deuxième extrémité 118 qui est emmanchée sur l'extrémité dénudée 106 et qui présente un orifice 120 lui-même coaxial avec l'extrémité dénudée 106.

Le capot 112 est monté coulissant par rapport au sabot 110 entre la position de sécurité dans laquelle l'extrémité dénudé 106 ne sort pas par ledit orifice 120 et la position de connexion dans laquelle l'extrémité dénudée 106 sort par ledit orifice 120.

La deuxième extrémité 118 présente un orifice 120 qui permet le passage de l'extrémité dénudée 106 en position de connexion.

Le moyen de rappel 114 contraint le capot 112 en position de sécurité et il prend ici la forme d'un ressort de compression. Le ressort de compression 114 est disposé à l'intérieur du capot 112 et s'appuie sur le sabot 110 par l'une de ses extrémités et sur une paroi de rappel 124 du capot 112 par l'autre de ses extrémités.

Le capot 112 comporte, pour chaque position, des moyens formant butée qui stoppent ledit capot 112 dans ladite position et l'empêchent d'aller au-delà de ladite position.

Dans la position de sécurité, les moyens formant butée sont des ergots 116 qui se mettent en butée contre le sabot 110 sous l'effet des moyens de rappel 114.

Dans la position de connexion, les moyens formant butée sont constitués par la paroi de rappel 124.

Le fonctionnement du conducteur électrique équipé 100 est le suivant:
- le conducteur électrique équipé 100 en position de sécurité est approché d'une plaque 10 percée d'un trou 12,
- la deuxième extrémité 118 est mise en contact contre la plaque 10,
- l'orifice 120 et le trou 12 sont alignés l'un avec l'autre,
- une force F est exercée sur la gaine 108, la force F est orientée vers l'extrémité dénudée 106,
- la gaine 108 s'enfonce dans le capot 112 tandis que l'extrémité dénudée 106 sort par l'orifice 120 et pénètre dans le trou 12, le conducteur électrique équipé 100 passe alors en position de connexion,
- l'extrémité dénudée 106 peut alors être fixée par tout moyen adéquat prévu de l'autre côté de la plaque 10.

Le conducteur électrique équipé 100 permet donc une connexion avec tout moyen adéquat et ceci dans un environnement sécurisé puisque le technicien ne peut jamais être en contact avec l'extrémité dénudée 106 qui est soit logée dans le capot 112, soit logée dans la plaque 10.

Les Figs. 2a et 2b montrent un conducteur électrique équipé 200 selon un mode de réalisation de l'invention. Les éléments communs aux deux modes de réalisation portent les mêmes références.

Le conducteur électrique équipé 200 comporte un conducteur électrique 102 et un cache 204 réalisé dans un matériau électriquement isolant.

La Fig. 2a montre le conducteur électrique équipé 200 dans la position de sécurité et la Fig. 2b montre le conducteur électrique équipé 200 dans la position de connexion.

Le cache 204 comporte un sabot 110, un capot 212 et un moyen de rappel 114.

Le capot 212 prend la forme d'un cylindre creux coaxial avec l'extrémité dénudée 106 et présentant une première extrémité 122 qui est emmanchée sur le sabot 110 et une deuxième extrémité 218 qui est emmanchée sur l'extrémité dénudée 106 et qui présente un orifice 120 lui-même coaxial avec l'extrémité dénudée 106.

Le capot 212 est monté coulissant par rapport au sabot 110 entre la position de sécurité dans laquelle l'extrémité dénudée 106 ne sort pas par l'orifice 120 et la position de connexion dans laquelle l'extrémité dénudée 106 sort par l'orifice 120.

Le mode de réalisation de l'invention se distinguent de l'état de la technique par la forme de la deuxième extrémité 118, 218.

Le capot 212 présente un épaulement 250 perpendiculaire à l'axe de l'extrémité dénudée 106 et qui est réalisé dans le mode de réalisation de l'invention présenté ici par une réduction du rayon du cylindre extérieur constituant la paroi extérieure du capot 212.

Le capot 212 est ainsi constitué d'un premier cylindre entre la première extrémité 116 et l'épaulement 250 et un deuxième cylindre coaxial au premier cylindre entre l'épaulement 250 et la deuxième extrémité 218. Le premier cylindre a un premier rayon R et le deuxième cylindre a un deuxième rayon r inférieur au premier rayon R.

L'orifice 120 est réalisé dans le deuxième cylindre et il est coaxial avec ce dernier.

Le moyen de rappel 114 contraint le capot 212 en position de sécurité et il est disposé à l'intérieur du capot 212 et s'appuie sur le sabot 110 par l'une de ses extrémités et sur une paroi de rappel 124 du capot 212 par l'autre de ses extrémités.

Le capot 212 comporte, pour chaque position, des moyens formant butée qui stoppent ledit capot 212 dans ladite position et l'empêchent d'aller au-delà de ladite position. Les moyens formant butée sont identiques à ceux de l'état de la technique.

Le fonctionnement du conducteur électrique équipé 200 est le suivant:
- le conducteur électrique équipé 200 en position de sécurité est approché d'une plaque 20 percée d'un trou 22,
- le deuxième cylindre est inséré dans le trou 22 jusqu'à ce que l'épaulement 250 soit mis en contact contre la plaque 20,
- l'orifice 120 et le trou 22 sont alors alignés l'un avec l'autre,
- une force F est exercée sur la gaine 108, la force F est orientée vers l'extrémité dénudée 106,
- la gaine 108 s'enfonce dans le capot 212 tandis que l'extrémité dénudée 106 sort par l'orifice 120 et pénètre dans le trou 22, le conducteur électrique équipé 100 passe alors en position de connexion,
- l'extrémité dénudée 106 peut alors être fixée par tout moyen adéquat prévu de l'autre côté de la plaque 20.

Le conducteur électrique équipé 200 permet donc une connexion avec tout moyen adéquat et ceci dans un environnement sécurisé puisque le technicien ne peut jamais être en contact avec l'extrémité dénudée 106 qui est soit logée dans le capot 212, soit logée dans la plaque 20.

En outre, l'insertion du deuxième cylindre et la mise en butée de l'épaulement 250 contre la plaque 20 permettent encore une meilleure protection contre un possible choc électrique par augmentation de la distance entre l'extrémité dénudée 106 et l'extérieur où se tient le technicien.

Dans la position de connexion, la paroi de rappel 124 écrase entièrement le ressort de compression 114, bloquant ainsi la progression du sabot 110 après la compression totale du ressort de compression 114.

Pour faciliter l'insertion de l'extrémité dénudée 106 dans l'orifice 120, la paroi de rappel 124 prend la forme d'un tronc de cône coaxial avec l'axe de l'extrémité dénudée 106 et dont la grande base est disposée du côté de la première extrémité 122.

## Revendications

1. Cache (204) pour un conducteur électrique (102) présentant une gaine électriquement isolante (108) et une extrémité dénudée (106), ledit cache (204) étant réalisé dans un matériau électriquement isolant et comportant:
- un sabot (110) destiné à être fixé sur la gaine (108),
- un capot (212) présentant une première extrémité (122) emmanchée sur le sabot (110) et une deuxième extrémité (218) destiné à être emmanchée sur l'extrémité dénudée (106) et présentant un orifice (120), ledit capot (212) étant monté coulissant par rapport au sabot (110) entre une position de sécurité dans laquelle l'extrémité dénudée (106) ne sort pas par ledit orifice (120) et une position de connexion dans laquelle l'extrémité dénudée (106) sort par ledit orifice (120), et
- un moyen de rappel (114) prévu pour contraindre le capot (212) en position de sécurité,
le cache (204) étant **caractérisé en ce que** le capot (212) présente un épaulement (250) prévu pour être perpendiculaire à l'axe de l'extrémité dénudée (106), **en ce que** le capot (212) est constitué d'un premier cylindre entre la première extrémité (116) et l'épaulement (250) et un deuxième cylindre coaxial au premier cylindre entre l'épaulement (250) et la deuxième extrémité (218), **en ce que** le premier cylindre a un premier rayon et **en ce que** le deuxième cylindre a un deuxième rayon inférieur audit premier rayon.

2. Cache (204) selon la revendication 1, **caractérisé en ce que** le moyen de rappel (114) est un ressort de compression disposé à l'intérieur du capot (212) dont l'une des extrémités s'appuie sur le sabot (110) et dont l'autre extrémité s'appuie sur une paroi de rappel (124) du capot (212).

3. Cache (204) selon l'une des revendications 1 ou 2, **caractérisé en ce que** le capot (212) comporte, pour chaque position, des moyens formant butée prévus pour stopper ledit capot (212) dans ladite position et l'empêcher d'aller au-delà de ladite position.

4. Conducteur électrique équipé (200) comportant :
- un conducteur électrique (102) présentant une gaine électriquement isolante (108) et une extrémité dénudée (106), et
- un cache (204) selon l'une des revendications 1 à 3.

5. Conducteur électrique équipé (200) selon la revendication 4, **caractérisé en ce que** le moyen de rappel (114) est un ressort de compression disposé à l'intérieur du capot (212) dont l'une des extrémités s'appuie sur le sabot (110) et dont l'autre extrémité s'appuie sur une paroi de rappel (124) du capot (212).

6. Conducteur électrique équipé (200) selon l'une des revendications 4 ou 5, **caractérisé en ce que** le capot (212) comporte, pour chaque position, des moyens formant butée prévus pour stopper ledit capot (212) dans ladite position et l'empêcher d'aller au-delà de ladite position.

## Patentansprüche

1. Abdeckung (204) für einen elektrischen Leiter (102) aufweisend einen elektrisch isolierenden Mantel (108) und ein freigelegtes Ende (106), wobei die genannte Abdeckung (204) aus einem elektrisch isolierenden Material gefertigt ist und folgendes umfasst:
- einen Schuh (110), der dazu bestimmt ist, auf dem Mantel (108) befestigt zu werden,
- eine Kappe (212) aufweisend ein erstes Ende (112), das auf den Schuh (110) aufgesteckt ist, und ein zweites Ende (218), das dazu bestimmt ist, auf das freigelegte Ende (106) aufgesteckt zu werden und das eine Öffnung (120) aufweist, wobei die genannte Kappe (212) gegenüber dem Schuh (110) zwischen einer Sicherheitsstellung, in der das freigelegte Ende (106) nicht aus der genannten Öffnung (120) austritt, und einer Anschlussstellung, in der das freigelegte Ende (106) aus der genannten Öffnung(120) austritt, gleitend montiert ist, und
- ein Rückstellmittel (114) das dazu vorgesehen ist, die Kappe (212) in Sicherheitsstellung zu halten,
wobei die Abdeckung (204) **dadurch gekennzeichnet ist, dass** die Kappe einen Absatz (250) aufweist, der dazu vorgesehen ist, senkrecht zur Achse des freigelegten Endes (106) ausgerichtet zu sein, dass die Kappe (212) aus einem ersten Zylinder zwischen dem ersten Ende (116) und dem Absatz (250) und einem" zum ersten Zylinder koaxialen zweiten Zylinder zwischen dem Absatz (250) und dem zweiten Ende (218) besteht, dass der erste Zylinder einen ersten Radius hat und der zweite Zylinder einen zweiten Radius hat, der kleiner als der erste Radius ist.

2. Abdeckung (204) nach Patentanspruch 1, **dadurch gekennzeichnet, dass** das Rückstellmittel (114) eine, im Inneren der Kappe 212) angeordnete Druckfeder umfasst, deren eines Ende sich an dem Schuh (110) und deren anderes Ende sich an einer Rückstellwand (124) der Kappe 212 abstützt.

3. Abdeckung (204) nach einem der Patentansprüche 1 oder 2, **dadurch gekennzeichnet, dass** die Hube 212 für jede Position einen Anschlag bildende Mittel umfasst, die dazu vorgesehen sind, die genannte Kappe (212) in der genannten Position zu stoppen und daran zu hindern, sich über die genannte Position hinaus zu bewegen.

4. Ausgerüsteter elektrischer Leiter (200) umfassend:
- einen elektrischen Leiter (102) aufweisend einen elektrisch isolierenden Mantel (108) und ein freigelegtes Ende (106) und
- eine Abdeckung (204) nach einem der Patentansprüche 1 bis 3.

5. Ausgerüsteter elektrischer Leiter (102) nach Patentanspruch 4, **dadurch gekennzeichnet, dass** das Rückstellmittel (114) eine, im Inneren der Kappe (212) angeordnete Druckfeder ist, deren eines Ende sich auf dem Schuh (110) und deren anderes Ende sich auf einer Rückstellwand (124) der Kappe (212) abstützt.

6. Ausgerüsteter elektrischer Leiter (200) nach einem der Patentansprüche 4 oder 5, **dadurch gekennzeichnet, dass** die Kappe (212) für jede Position einen Anschlag bildende Mittel umfasst, die vorgesehen sind, um die genannte Kappe (212) in der genannten Position zu stoppen und daran zu hindern, sich über die genannnte Position hinaus zu bewegen.

## Claims

1. Cover (204) for an electrical conductor (102) having an electrically insulating sheath (108) and a stripped end (106), said cover (204) being produced in an electrically insulating material and comprising:
- a shoe (110) intended to be fixed onto the sheath (108),
- a cap (212) having a first end (122) fitted over the shoe (110) and a second end (218) intended to be fitted over the stripped end (106) and having an orifice (120), said cap (212) being mounted to slide relative to the shoe (110) between a safety position in which the stripped end (106) does not exit through said orifice (120) and a connection position in which the stripped end (106) exits through said orifice (120), and
- a return means (114) provided to force the cap (212) into the safety position,
the cover (204) being **characterized in that** the cap (212) has a shoulder (250) provided to be at right angles to the axis of the stripped end (106), **in that** the cap (212) consists of a first cylinder between the first end (116) and the shoulder (250) and a second cylinder coaxial to the first cylinder between the shoulder (250) and the second end (218), **in that** the first cylinder has a first radius and **in that** the second cylinder has a second radius smaller than said first radius.

2. Cover (204) according to Claim 1, **characterized in that** the return means (114) is a compression spring arranged inside the cap (212) of which one of the ends bears on the shoe (110) and of which the other end bears on a return wall (124) of the cap (212).

3. Cover (204) according to one of Claims 1 or 2, **characterized in that** the cap (212) comprises, for each position, abutment forming means provided to stop said cap (212) in said position and prevent it from going beyond said position.

4. Equipped electrical conductor (200) comprising:
- an electrical conductor (102) having an electrically insulating sheath (108) and a stripped end (106), and
- a cover (204) according to one of Claims 1 to 3.

5. Equipped electrical conductor (200) according to Claim 4, **characterized in that** the return means (114) is a compression spring arranged inside the cap (212) of which one of the ends bears on the shoe (110) and of which the other end bears on a return wall (124) of the cap (212).

6. Equipped electrical conductor (200) according to one of Claims 4 or 5, **characterized in that** the cap (212) comprises, for each position, abutment forming means provided to stop said cap (212) in said position and prevent it from going beyond said position.
